# EUROPÄISCHE PATENTANMELDUNG

(11) **EP 2 533 346 A1**
(43) Veröffentlichungstag der Anmeldung: **12.12.2012**
(21) Anmeldenummer: 11004698.4
(22) Anmeldetag: 09.06.2011
(51) Int. Cl.: H01M 10/42, H01M 2/12, H01M 2/36, F16K 15/00, H01M 2/10, G01F 23/26, B60L 11/18

(54) **Vorrichtung zur Entfernung von Flüssigkeit aus einer Energiespeichervorrichtung**

(71) Anmelder: Carl Freudenberg KG, 69469 Weinheim (DE)
(72) Erfinder: Kritzer, Peter, Dr., 67147 Forst (DE); Ewig, Tobias, 68309 Mannheim (DE); Clemens, Markus, 64385 Reichelsheim (DE); Stephan, Ingo, 64668 Rimbach (DE)

(57) **Zusammenfassung**

Gegenstand der Erfindung ist eine Flüssigkeiftsabfuhrvorrichtung, insbesondere zur Entfernung von Flüssigkeit aus einer Energiespeichervorrichtung, wobei die Flüssigkeitsabfuhrvorrichtung mit der Energiespeichervorrichtung verbindbar ist, wobei die Flüssigkeitsabfuhrvorrichtung mindestens eine Einlassöffnung aufweist, durch die Flüssigkeit aus der Energiespeichervorrichtung in die Flüssigkeitsabfuhrvorrichtung gelangen kann, wobei die Flüssigkeitsabfuhrvorrichtung eine flüssigkeitsabsorbierende Einrichtung enthält, die Flüssigkeit an die Umgebung abgeben kann.

## Beschreibung

### Technisches Gebiet

Die vorliegende Erfindung betrifft Vorrichtungen zur Entfernung von Flüssigkeit aus einer Energiespeichervorrichtung, sowie Energiespeichervorrichtungen, die solche Vorrichtungen umfassen und Verwendungen der Vorrichtungen.

### Stand der Technik

Speicher für elektrische und elektrochemische Energie, wie Batterien und Kondensatoren, enthalten abgeschlossene Zellen, die in einem Gehäuse platziert sind. Das äußere Gehäuse dient unter anderem zum Schutz der Zellen vor mechanischen Beeinträchtigungen, vor Verunreinigungen und vor dem Eindringen von Flüssigkeiten aus der Umgebung. Die Zellen füllen in der Regel das Gehäuse nicht vollständig aus, so dass ein nicht genutztes Totvolumen verbleibt. Dieses entsteht beispielsweise durch Einsatz runder Zellen in ein eckiges Gehäuse oder bei der Integration elektronischer Komponenten. Üblicherweise weisen Batterien mit einem Volumen von 5 bis über 200 l ein Totvolumen von etwa 5 bis 50% auf.

Bei solchen Energiespeichern tritt das Problem auf, dass sich bei Betrieb über längere Zeiträume Flüssigkeit in dem Gehäuse ansammelt. Die Flüssigkeit ist häufig Kondensat von Feuchtigkeit aus der Umgebung, es kann sich jedoch, zumindest anteilig, auch um eingedrungene Flüssigkeit beispielsweise bei Beschädigung des Gehäuses, bei Beschädigung des Kühlkreislaufes oder um ausgetretene Flüssigkeit aus den Zellen handeln. Die Bildung von Kondensat wird durch Schwankungen von Druck und Temperatur begünstigt, da dann die Batterie, um einen Druckausgleich gewährleisten zu können, "atmen" muss. Neben atmosphärischen Temperatur- und Druckschwankungen können solche Schwankungen durch Höhenunterschiede, beispielsweise bei Berg- und Talfahrten oder beim Fliegen, oder bei Ein- und Ausfahrten im Tunnel verursacht sein. Pro Jahr sammeln sich in einer Energiespeichervorrichtung je nach Größe typischerweise 100 bis 300 ml Kondensat an. Bei einer 100-l-Energiespeichervorrichtung, die täglich signifikanten Unterschieden der Temperatur und der Luftfeuchtigkeit ausgesetzt ist, kann das jährlich akkumulierte Kondensat auch deutlich über 1000 ml umfassen.

Die Ansammlung von Flüssigkeiten In Energiespelchervorrichtungen kann zu Beeinträchtigungen der Leistung und im Extremfall zum Ausfall führen. Beispielsweise können Kriechströme oder Kurzschlüsse entstehen, wenn Kondensat in Kontakt mit stromführenden Teilen gelangt. Die Flüssigkeit kann auch die Korrosion von metallischen Komponenten bewirken, insbesondere wenn saure Gase, wie HCl oder Schwefeloxide, aus der Umgebungsluft durch das Kondensat ins Batterie-Innere gelangen.

Im Stand der Technik werden verschiedene Maßnahmen vorgeschlagen, um solche Flüssigkeiten aus dem Gehäuse von Energiespeichervorrichtungen zu entfernen. So wird durch den Einsatz von "atmungsaktiven Komponenten", wie beispielsweise dampfdurchlässige Werkstoffe der Markenbezeichnung Goretex, der Gasaustausch mit der Umgebung und damit die Abgabe von Wasserdampf unterstützt. Alternativ wird versucht, das Kondensat in dem Gehäuse durch Trockenmittel oder Superabsorber dauerhaft zu binden. Durch diese Maßnahmen werden die oben beschriebenen Probleme jedoch nicht vollständig gelöst. Es besteht jeweils die Gefahr, dass sich vor allem nach längerer Anwendung und in Gegenwart größerer Flüssigkeitsmengen das Trockenmittel oder die atmungsaktive Komponente mit Wasser füllt und überschüssiges Wasser nicht mehr abgeführt werden kann. Außerdem quellen Trockenmittel und Superabsorber bei der Benutzung, was wiederum zu Kurzschlüssen oder Kriechströmen führen kann und eine aufwändige Entfernung in regelmäßigen Abständen erfordert. Aufgequollene Superabsorber können innerhalb der Energiespeichervorrichtung leitfähige Brücken bilden oder mechanische Kräfte auf Kabel oder andere Bauteile in der Energiespeichervorrichtung ausüben. Bei Trockenmitteln besteht auch die Gefahr, dass korrosive oder elektrisch leitfähige Komponenten, wie Calciumchlorid oder Phosphorsäure, freigesetzt werden.

Im Stand der Technik wird auch versucht, Kondenswasser mit Hilfe zusätzlicher elektrischer Komponenten gezielt abzuleiten. Beispielsweise kann ein Sensor in einem Gehäuse signalisieren, dass ein Magnetventil gezielt zu öffnen ist oder dass eine Pumpe aktiviert wird, die das Kondenswasser abführt. Problematisch ist dabei, dass solche Lösungen technisch relativ aufwändig und störanfällig sind. Außerdem verbrauchen sie Energie, was bei vielen Anwendungen, beispielsweise Batterien oder Brennstoffzellen von Elektrofahrzeugen mit geringer Reichweite, grundsätzlich nicht wünschenswert Ist. Nachteilig ist auch, dass bei solchen Lösungsansätzen das Kondenswasser nicht kontinuierlich abgeführt wird, sondem erst nach Überschreiten eines definierten Schwellenwertes. Dies führt dazu, dass ein gewisser Wassergehalt in dem Gehäuse toleriert wird, was jedoch bereits zu den oben beschriebenen Problemen wie Korrosion führen kann.

### Aufgabe der Erfindung

Der Erfindung liegt die Aufgabe zugrunde, Vorrichtungen und Verwendungen bereitzustellen, welche die oben beschriebenen Nachteile überwinden. Es soll eine möglichst einfache und effiziente Vorrichtung bereitgestellt werden, um Kondensat und sonstige Flüssigkeiten aus dem Inneren von Energiespeichervorrichtungen und ähnlichen Vorrichtungen zum Speichern von Energie zu entfernen. Die Vorrichtung selbst soll in ihrer Grundfunktion rein mechanisch ohne Nutzung elektrischer Energie arbeiten. Sie soll auf einfache Weise anwendbar und einsetzbar sein und möglichst wenig Wartungsaufwand erfordern. Die Entfernung von Kondensat und sonstigen Flüssigkeiten soll bevorzugt kontinuierlich erfolgen und nicht lediglich zu definierten Zeit- oder Kontrollpunkten. Die Vorrichtung soll unter verschiedenen Bedingungen einsetzbar sein und beispielsweise in der Lage sein, sowohl geringe als auch große Flüssigkeitsmengen zu entfemen.

### Darstellung der Erfindung

Die vorliegende Erfindung löst die zuvor genannte Aufgabe durch Vorrichtungen und Verwendungen gemäß den Patentansprüchen. Weitere bevorzugte Ausführungsformen werden in der Beschreibung offenbart.

Gegenstand der Erfindung ist eine Flüssigkeitsabfuhrvorrichtung, insbesondere zur Entfernung von Flüssigkeit aus einer Energiespeichervorrichtung, wobei die Flüssigkeitsabfuhrvorrichtung mit der Energiespeichervorrichtung verbindbar ist, wobei die Flüssigkeitsabfuhrvorrichtung mindestens eine Einlassöffnung aufweist, durch die Flüssigkeit aus der Energiespeichervorrichtung in die Flüssigkeitsabfuhrvorrichtung gelangen kann, wobei die Flüssigkeitsabfuhrvorrichtung eine flüssigkeitsabsorbierende Einrichtung enthält, die Flüssigkeit an die Umgebung abgeben kann.

Die Flüssigkeitsabfuhrvorrichtung dient bevorzugt zur Entfernung von Flüssigkeit aus einer Energiespeichervorrichtung. Erfindungsgemäß dient die Energiespeichervorrichtung insbesondere zur Speicherung von elektrischer oder elektrochemischer Energie. Erfindungsgemäße Energiespeichervorrichtungen schließen Vorrichtungen zur Erzeugung und Umwandlung von elektrischer oder elektrochemischer Energie ein, wie zum Beispiel Brennstoffzellen. Geeignete Energiespeichervorrichtungen sind insbesondere solche, die Zellen zur Speicherung, Umwandlung und/oder Erzeugung von elektrischer und/oder elektrochemischer Energie in einem Gehäuse enthalten. Bevorzugt ist die Energiespeichervorrichtung ausgewählt aus Batterien, Kondensatoren, Superkondensatoren, Akkumulatoren und Brennstoffzellen.

Dabei dient die erfindungsgemäße Flüssigkeitsabfuhrvorrichtung zur Entfernung von Flüssigkeit aus dem Gehäuse der Energiespeichervorrichtung. Die zu entfernende Flüssigkeit ist insbesondere Kondenswasser (Kondensat), kann jedoch auch von außen eingedrungene Flüssigkeit oder Leckage-Flüssigkeit aus einem Kühlkreislauf oder einer Energiespeicherzelle sein, oder ein Gemisch solcher Flüssigkeiten. Die Flüssigkeit ist bevorzugt Wasser oder eine wässrige Lösung. Sie kann jedoch, beispielsweise im Falle von Elektrolyten oder Kühlflüssigkeiten, auch ein organisches Lösungsmittel sein oder zumindest enthalten. Die Flüssigkeit kann gelöste Bestandteile, wie Salze oder Gase, enthalten.

Die Flüssigkeit sammelt sich zunächst im Inneren der Energiespeichervorrichtung an. Bevorzugt wird die erfindungsgemäße Flüssigkeitsabfuhrvorrichtung mit der Energiespeichervorrichtung so verbunden, dass die Flüssigkeit mechanisch durch die Einlassöffnung in die Flüssigkeitsabfuhrvorrichtung gelangt. Dies kann auf einfache Weise unter Ausnützung der Schwerkraft gewährleistet werden, wenn die Flüssigkeitsabfuhrvorrichtung auf der Unterseite der Energiespeichervorrichtung angebracht wird, bevorzugt am tiefsten Punkt der Energiespeichervorrichtung. Die Flüssigkeitsabfuhrvorrichtung kann jedoch auch seitlich oder an beliebigen anderen Positionen des Gehäuses der Energiespeichervorrichtung angebracht werden. Bei Verwendung in Fahrzeugen können auch Positionen gewählt werden, bei denen die sich sammelnde Flüssigkeit durch typische Fahrbewegungen hintransportiert wird. So kann die Flüssigkeitsabfuhrvorrichtung hinter oder vor der Energiespeichervorrichtung positioniert werden. Die Flüssigkeit wird dann beispielsweise durch Beschleunigung oder Verzögerung der Flüssigkeitsabfuhrvorrichtung zugeführt.

Die Verbindung der Energiespeichervorrichtung mit der Flüssigkeitsabfuhrvorrichtung weist eine Einlassöffnung auf, durch welche die Flüssigkeit aus der Energiespeichervorrichtung in die Flüssigkeitsabfuhrvorrichtung gelangt. In der erfindungsgemäßen Flüssigkeitsabfuhrvorrichtung wird die Flüssigkeit bei Kontakt mit einer flüssigkeitsabsorbierenden Einrichtung von dieser aufgenommen. Die flüssigkeitsabsorbierende Einrichtung gibt die Flüssigkeit an die Umgebung ("nach außen") ab. Bevorzugt erfolgt die Flüssigkeitsabgabe durch Verdunstung. Dann wird die Flüssigkeit nicht in flüssiger Form, sondern als Dampf an die Umgebung abgegeben.

Die erfindungsgemäße Flüssigkeitsabfuhrvorrichtung weist ein äußeres Gehäuse mit Außenwänden auf. Geeignet ist beispielsweise ein rohrförmiges oder zylinderförmiges Gehäuse. Das Gehäuse kann direkt formschlüssig mit der Energiespeichervorrichtung verbunden werden oder auch indirekt, beispielsweise über eine Schlauch- oder Rohrverbindung. Durch mindestens eine Auslassöffnung wird gewährleistet, dass Flüssigkeit durch die flüssigkeitsabsorbierende Einrichtung in die Umgebung, das heißt aus der Vorrichtung hinaus, transferiert werden kann.

In einer bevorzugten Ausführungsform der Erfindung ist die flüssigkeitsabsorbierende Einrichtung ein Vliesstoff, ein Gewebe, eine Netz, ein Faserbündel, wie eine Schnur, ein Hohlfaserbündel oder ein Seil, ein Papier, eine flüssigkeitsdurchlässige Membran und/oder eine Partikelschüttung. Die Membran ist bevorzugt löchrig oder offenporig, insbesondere mikroporös. Die flüssigkeitsabsorbierende Einrichtung dient gleichzeitig zur Aufnahme der Flüssigkeit aus der Energiespeichervorrichtung und zur Abgabe der Flüssigkeit an die Umgebung, insbesondere durch Verdunsten.

Besonders bevorzugt ist die flüssigkeitsabsorbierende Einrichtung eine Schicht. Durch eine Schichtstruktur kann wegen der großen Oberfläche auf beiden Seiten eine effiziente Aufnahme sowie Abgabe der Flüssigkeit an die Umgebung erreicht werden. Die flüssigkeitsabsorbierende Einrichtung und/oder Schicht ist bevorzugt hydrophil, so dass eine effiziente Wasseraufnahme und Wasserabgabe erreicht wird. Dabei ist es bevorzugt, dass die Geschwindigkeit der Wasseraufnahme und -abgabe hoch ist. Dagegen ist eine hohe Wasseraufnahmekapazität weniger bedeutsam, da die Einrichtung im Wesentlichen nicht als Flüssigkeitsspeicher, sondern zur Weiterleitung bzw. Verdunstung der Flüssigkeit dienen soll. Auf diese Weise kann eine Ansammlung großer Flüssigkeitsmengen mit den damit verbundenen Problemen, wie Quellung und Gewichtszunahme, vermieden werden.

In einer bevorzugten Ausführungsform der Erfindung weist die wasserableitende Schicht eine Dicke von 0,05 bis 10 mm, bevorzugt zwischen 0,1 bis 5 mm oder zwischen 0,2 bis 2 mm auf.

Die flüssigkeitsabsorbierende Schicht wird bevorzugt parallel zu einer Außenwand der Flüssigkeitsabfuhrvorrichtung angeordnet. Bevorzugt enthält die Außenwand mindestens eine Auslassöffnung zur Abgabe der Flüssigkeit an die Umgebung. Durch diese Maßnahmen wird eine effiziente Flüssigkeitsabfuhr erreicht.

In einer bevorzugten Ausführungsform ist die flüssigkeitsabsorbierende Schicht ein Vliesstoff. Es wurde festgestellt, dass Vliesstoffe in besonderem Maße eine effiziente Flüssigkeitsaufnahme und -abgabe bewirken können. In einer bevorzugten Ausführungsform besteht das Vlies aus anorganischen Fasem. Dabei ist vorteilhaft, dass anorganische Fasem weitgehend inert gegen Verrottung oder Zersetzung sind, insbesondere bei erhöhten Temperaturen und in Gegenwart von Feuchtigkeit. Anorganische Fasem können z.B. aus Graphit, Metallen oder auch mineralischen Komponenten bestehen.

In einer weiteren bevorzugten Ausführungsform besteht das Vlies aus Fasem oder Filamenten aus organischen Polymeren. Bevorzugt sind Faserstärken von weniger als 15 µm, da die dadurch entstehende große Oberfläche des Vliesstoffes zu einer effizienten Flüssigkeitsaufnahme führt. Die organischen Polymere können aus üblichen Werkstoffen bestehen, beispielsweise Polyamid, Polyester (PES) oder auch aus Mischungen, z.B. aus Polyamid und Polyester. Geeignet sind auch hydrophilierte Polyolefine, beispielsweise solche mit einer UV-induzierten Pfropfung mit ungesättigten organischen Substanzen, wie Acrylsäure oder Maleinsäureanhydrid. Geeignet sind auch Vliese mit einer dauerhaften Beschichtung von hydrophilen organischen oder anorganischen Partikeln, wie SiO₂, Al₂O₃ oder TiO₂.

Die flüssigkeitsabsorbierende Einrichtung kann auch aus Bündeln aus Hohlfasem oder Fasersträngen, wie Schnüren oder Seilen, bestehen.

Die flüssigkeitsabsorbierende Einrichtung kann auch eine Schüttung hydrophiler Partikel sein. Bevorzugt sind anorganische Partikel, beispielsweise SiO₂, Al₂O₃, TiO₂ oder Kohlepartikel, oder organische Partikel, wie Superabsorber (SAP)-Partikel. Auch Partikel biologischen Ursprungs, wie Holzstreu, können eingesetzt werden, wobei in diesem Falle deren geringe Verrottungs-Stabilität zu berücksichtigen ist. Die Schüttung kann zwischen zwei porösen Membranen oder Vliesstoffen oder sonstigen Trennschichten angeordnet sein.

Erfindungsgemäß können auch beliebige Kombinationen der genannten flüssigkeitsabsorbierenden Einrichtungen eingesetzt werden. Beispielsweise können Laminate aus verschiedenen Schichten, wie Vliesen und Partikelschüttungen, eingesetzt werden, oder Materialien können innerhalb einer Schicht vermischt werden.

In einer bevorzugten Ausführungsform der Erfindung weist die Flüssigkeitsabfuhrvorrichtung zusätzlich eine poröse Schutzschicht auf, die zwischen der flüssigkeitsabsorbierenden Einrichtung und der Umgebung angeordnet ist, wobei die poröse Schutzschicht wasserdampfdurchlässig und flüssigkeitsundurchlässig ist. Die poröse Schutzschicht ist also so angeordnet, dass durch sie Wasserdampf, der aus der flüssigkeitsabsorbierenden Einrichtung abgegeben wird, in die Umgebung gelangt.

In einer bevorzugten Ausführungsform der Erfindung ist die poröse Schutzschicht ein Vlies, ein Netz, ein Gewebe oder eine Membran. Dabei ist die Schutzschicht bevorzugt hydrophobiert und/oder oleophobiert. Diese poröse Schutzschicht schützt die flüssigkeitsabsorbierende Einrichtung und somit das Innere der Flüssigkeitsabfuhrvorrichtung davor, dass Flüssigkeit aus der Umgebung eindringt. Die poröse Schutzschicht soll insbesondere das Eindringen von Wasser, beispielsweise Spritzwasser beim Betrieb von Fahrzeugen, oder Ölen verhindern. Zusätzlich dient die Schutzschicht als Schutz vor Partikeln, Staub und gegebenenfalls mechanischen Beeinträchtigungen. Gegebenenfalls kann die Schutzschicht auch so ausgebildet sein, dass sie das Eindringen von korrosiven Gasen, wie Schwefeloxide oder Stickoxiden, verhindert.

Materialien, die dampfdurchlässig und flüssigkeitsundurchlässig sind, sind grundsätzlich bekannt. Sie werden z.B. in Kleidungsapplikationen als "atmungsaktiv" bezeichnet. Solche Materiallen basieren im Allgemeinen auf Membranen ("Gore-Tex") oder aus Fasermaterialien, wie Vliesen, deren Oberflächen hydrophobiert sind, beispielsweise durch eine Überschichtung mit Fluorkohlenwasserstoffen, Silikonen oder Polyurethanen. In einer bevorzugten Ausführungsform ist die Beschichtung zugleich hydrophob und oleophob. In einer weiteren bevorzugten Ausführungsform werden atmungsaktive, hydrophobe Membranen, beispielsweise auf der Basis von PTFE (Polytetrafluorethylen) oder Polyolefinen eingesetzt. Je nach Platzierung der Flüssigkeitsabfuhrvorrichtung können an die Schutzschicht unterschiedliche Anforderungen gestellt werden. Kommt die Vorrichtung beispielsweise lediglich in Kontakt mit Spritzwasser, so können relativ offenporige Materialien eingesetzt werden. Wenn das Element darüber hinaus aber auch eine Watfähigkeit von z.B. von mehr als 500 mm Wassersäule aufweisen soll, so sollten die maximalen Poren der Vliesstoffe bzw. Membranen bei Werten von unterhalb 30 µm (bevorzugt unterhalb von 20 µm) liegen. Die Vliesstoffe oder Membranen können in einer weiteren Ausführungsform zusätzlich mit Heizelementen versehen werden.

Erfindungsgemäß kann eine flüssigkeitsabsorbierende Schicht flächig mit einer äußeren porösen Schutzschicht verbunden werden, so dass ein Laminat erhalten wird. Alternativ ist es bevorzugt, zwischen einer flüssigkeitsabsorbierenden Schicht und einer porösen Schutzschicht Abstandshalter ("Spacer") anzubringen. Dadurch entstehen definierte Hohlräume zwischen beiden Schichten. Durch solche Abstandshalter zwischen der hydrophilen inneren Schicht und der hydrophoben äußeren Schicht kann die Gefahr reduziert werden, dass Wasser aus der Umgebung von außen in die Flüssigkeitsabfuhrvorrichtung eindringt, da sich keine Filme bilden können, die das Wasser durch das hydrophile Vlies drücken. Bevorzugte Abstandshalter sind beispielsweise Netze, Gewebe oder Vliesstoffe, wobei als Vliesstoffe insbesondere solche mit größeren Poren bzw. dickeren Fasem geeignet sind.

In einer bevorzugten Ausführungsform der Erfindung weist die Fiüssigkeitsabfuhrvorrichtung eine äußere Schutzhülle auf. Die äußere Schutzhülle dient zum Schutz der Flüssigkeitsabfuhrvorrichtung vor mechanischen Schäden, beispielsweise gegen Steinschlag am Unterboden eines Kraftfahrzeugs. Sie soll den Abtransport von Flüssigkeit aus der Flüssigkeitsabfuhrvorrichtung nicht beeinträchtigen und muss daher Löcher oder größere Poren aufweisen. Die äußere Schutzhülle kann beispielsweise die Form eines Rohres aufweisen. Im Übrigen kann sie jede beliebige Form aufweisen, die an das Gehäuse der Flüssigkeitsabfuhrvorrichtung angepasst ist. Die Schutzhülle kann beispielsweise aus gelöchertem Metall oder Kunststoff, wie Polyamid, TPE oder aus geeigneten Elastomeren bestehen. Es kann auch ein mit Stahlwolle gefülltes Lochblech eingesetzt werden. Dadurch kann eine Tiefenfilterung erfolgen und eine direkte Einwirkung von Wasser aus der Umgebung oder von Partikeln und Schäden durch Steinschlag verhindert werden. Eine solche äußere Schutzschicht verhindert auch die Verschmutzung der Flüssigkeitsabfuhrvorrichtung und der funktionalen hydrophilen oder hydrophoben wasserableitenden Schichten.

Die erfindungsgemäße Flüssigkeitsabfuhrvorrichtung bewirkt einen effektiven Flüssigkeitstransport aus der Energiespeichervorrichtung durch die flüssigkeitsabsorbierende Schicht der Flüssigkeitsabfuhrvorrichtung in die äußere Umgebung der Flüssigkeitsabfuhrvorrichtung. In einer bevorzugten Ausführungsform der Erfindung weist die Flüssigkeitsabfuhrvorrichtung ein Rückschlagventil auf, das den Flüssigkeitstransport aus der Energiespeichervorrichtung in die Umgebung unterbricht, wenn Flüssigkeit aus der Umgebung in die Flüssigkeitsabfuhrvorrichtung einzudringen droht Grundsätzlich Ist Jedes bekannte Rückschlagventil einsetzbar, das in Gegenwart von Flüssigkeit einen Durchlass für Flüssigkeit verschließt. Bevorzugt weist das Rückschlagventil ein Dichtelement auf, das das Eindringen von außen anstehender Flüssigkeit in die Energiespeichervorrichtung verhindert und die Vorrichtung so nachhaltig abdichtet.

In einer bevorzugten Ausführungsform weist das Rückschlagventil einen Schwimmer auf. Bevorzugt ist das Dichtelement selbst als Schwimmer ausgebildet. Ein Schwimmer weist eine geringere Dichte als die Flüssigkeit, insbesondere als Wasser, auf und ist in Richtung des Durchlasses beweglich. Dabei wird der Schwimmer in einer ausreichenden Flüssigkeitsmenge wegen der geringeren Dichte angehoben. Da der Schwimmer oder das Dichtelement in den darüber liegenden Durchlass passen oder mit diesem formschlüssig abschließen, wird dieser durch den erhöhten Flüssigkeitsspiegel in die Öffnung gedrückt und schließt diese effektiv ab. Die Flüssigkeitsabfuhrvorrichtung kann dann so lange keine Flüssigkeit, wie Kondenswasser, mehr aufnehmen, bis die Flüssigkeit wieder über die flüssigkeitsabsorbierende Schicht aus der Flüssigkeitsabfuhrvorrichtung transportiert wurde. Der Schwimmer sollte eine Gesamtdichte von deutlich unterhalb 1 kg/l aufweisen. Er kann dafür z.B. aus spezifisch leichteren Vollmaterialien bestehen, z.B. polyolefinischen Kunststoffen oder Holz. Er kann aus hohl ausgestaltet sein, z.B. als Hohlkugel, oder auch Schaum- bzw. Wabenstrukturen beinhalten. Denkbar ist auch ein innerer Hohlraum, welcher ein Gas enthält, welches spezifisch leichter ist als Luft (z.B. Helium) oder ein Vakuum.

In einer bevorzugten Ausführungsform der Erfindung sind das Dichtelement und/oder der Schwimmer zylindrisch, kugelförmig, kegelförmig oder ringförmig ausgebildet und/oder auf einer porösen bzw. definierte Löcher enthaltenden Membran angebracht. Ein zylindrisches oder kugelförmiges Dichtelement kann eine kreisförmige Öffnung effizient verschließen. Ein ringförmiges Dichtelement kann beispielsweise als Dichtring ausgebildet sein und eine Öffnung mit beliebiger Geometrie verschließen. Die Anbringung des Dichtelements auf einer flüssigkeitsdurchlässigen, insbesondere porösen bzw. Löcher enthaltende Membran erlaubt die gleichmäßige Anhebung des Dichtelements in Gegenwart von Flüssigkeit. Die Membran kann bei geringer Dichte und guter Beweglichkeit selbst als Schwimmer wirken oder zusammen mit einem Dichtelement einen Schwimmer bilden. Generell kann die Dichtfunktion durch Elastomere oder auch thermoplastische Elastomere, welche am beweglichen Teil angebracht sind, oder durch Elastomere oder auch thermoplastische Elastomere, welche am starren Teil angebracht sind, sichergestellt werden. Darüber hinaus ist auch denkbar, Elastomere oder auch thermoplastische Elastomere an beiden Teilen anzubringen.

Das Dichtelement kann auch als Schalter ausgebildet sein oder aus einem quellenden Elastomer bestehen. Bevorzugt ist die Abdichtung der Flüssigkeitsabfuhrvorrichtung durch das Rückschlagventil und insbesondere durch den Schwimmer reversibel, so dass nach Entfernung der Flüssigkeit wieder die Freigabe des Durchlasses erfolgt.

Die poröse Membran, an der das Dichtelement befestigt ist, kann mit weiteren Schichten der Flüssigkeitsabfuhrvorrichtung laminiert sein. In einer bevorzugten Ausführungsform der Erfindung umfasst die Flüssigkeitsabfuhrvorrichtung ein Laminat aus einer porösen Membran, einer flüssigkeitsabsorbierenden Einrichtung und gegebenenfalls einer porösen Schutzschicht. Die Verbindung der Schichten in der Flüssigkeitsabfuhrvorrichtung zu einem Laminat gewährleistet einen einfachen und platzsparenden Aufbau und einen einfachen Austausch bei Wartung oder Beschädigung.

In einer bevorzugten Ausführungsform der Erfindung weist die Flüssigkeitsabfuhrvorrichtung ein Sicherheitsventil auf, das sich bei Überschreitung des maximal zulässigen Überdrucks öffnet. Mit einem solchen Sicherheitsventil kann bei unzulässigem Überdruck gewährleistet werden, dass die Energiespeichervorrichtung und die Flüssigkeitsabfuhrvorrichtung nicht beschädigt werden. Auf diese Weise kann eine Fehlfunktion der Energiespeichervorrichtung ausgeglichen werden. Das Sicherheitsventil kann beispielsweise ein einfaches Überdruckelement sein, das bei erhöhtem Druck aus einer Halterung springt oder an einer Sollbruchstelle bricht. Ein erfindungsgemäßer Überdruckdeckel kann auch durch einen Permanentmagneten fixiert werden. Der Zeitpunkt der Ablösung kann über die Größe des Magneten und dessen Füllgrad eingestellt werden. Die metallische Gegenfläche ist dabei in die Dichtung integriert, so dass das Ventil auch in nicht magnetischen Energiespeichervorrichtungen einsetzbar ist. Das Überdruckventil kann auch aus einem Elastomer bestehen, das durch äußere Nippel gehalten wird und sich bei einem definierten Überdruck aus der Halterung löst.

In einer bevorzugten Ausführungsform der Erfindung weist die Flüssigkeitsabfuhrvorrichtung mindestens einen Sensor auf. Bevorzugt werden Flüssigkeitssensoren und/oder Temperatursensoren eingesetzt. Beispielsweise kann ein Sensor die Akkumulation von Flüssigkeit in der Flüssigkeitsabfuhrvorrichtung oder die Aufnahme von Flüssigkeit durch die flüssigkeitsabsorbierende Schicht anzeigen. Auf diese Weise kann unerwünschtes Eindringen von Flüssigkeit in die Flüssigkeitsabfuhrvorrichtung oder unerwünschte Akkumulation von Flüssigkeit in der Flüssigkeitsabfuhrvorrichtung angezeigt werden. Mit einem Temperatursensor kann beispielsweise unerwünschtes Einfrieren der Flüssigkeitsabfuhrvorrichtung gemessen werden. Über eine Detektionseinrichtung können die Signale von den Sensoren ausgewertet werden und gegebenenfalls Maßnahmen eingeleitet werden, welche die erkannten Missstände beheben. Beispielsweise kann der Temperatursensor das Einschalten eines Heizelements induzieren. Der Flüssigkeitssensor kann ebenfalls das Einschalten eines Heizelementes oder eines Lüfters induzieren.

Die Flüssigkeitssensoren können beispielsweise als kapazitive Sensoren ausgestaltet sein, bei denen die adsorbierende Einrichtung zwischen zwei Kondensatorplatten angeordnet ist. Bei Adsorption von Flüssigkeit durch die Vliesstoffschicht ändert sich die Kapazität des Sensors, was durch die Detektionseinrichtung erkannt wird. Bevorzugt erfolgt eine kabellose Übermittlung der Signale über RFID oder Funk. Bevorzugt sind mehrere Sensoren vorhanden, um eine höhere Genauigkeit der Signale zu gewährleisten und/oder Flüssigkeitsstände zu detektieren. Mit solchen Sensoren ist es auch möglich, Flüssigkeiten zu unterscheiden. Da Kondensat, also in der Regel mineralienfreies Wasser, z.B. einen anderen Signalausschlag bewirkt als Kühlmittel oder Elektrolyt, kann der Sensor auch als selektiver Leckagesensor benutzt werden.

Das Gehäuse der Flüssigkeitsabfuhrvorrichtung besteht beispielsweise aus Metall, Kunststoff, TPE oder aus Elastomeren. Die Anbringung der Flüssigkeitsabfuhrvorrichtung an das Energiespeichervorrichtungsgehäuse kann nach bekannten Methoden erfolgen, beispielsweise durch Verschrauben, Einrasten, Verspannen, Verkleben oder Verschweißen. Bei der Anbringung der Flüssigkeitsabfuhrvorrichtung an die Energiespeichervorrichtung sollte keine Schwelle entstehen, welche die Flüssigkeitsabfuhr aus der Energiespeichervorrichtung behindern könnte. Bevorzugt erfolgt die Anbringung der Fiüssigkeitsabfuhrvorrichtung durch eine Verklipsung, insbesondere eine Segment-Verklipsung oder Mehrpunkt-Verklipsung. Diese weisen Kanäle auf, um eine Flüssigkeitsabfuhr in die Flüssigkeitsabfuhrvorrichtung zu ermöglichen.

In einer bevorzugten Ausführungsform der Erfindung erfolgen der Betrieb der Flüssigkeitabfuhrvorrichtung selbst und die Entfernung der Flüssigkeit ohne Zuführung elektrischer Energie. Dies bedeutet, dass bevorzugt keine elektrischen Komponenten vorhanden sind, welche die Ableitung der Flüssigkeit bewirken oder unterstützen, wie Pumpen oder Heizelemente. Erfindungsgemäß kann die Ableitung der Flüssigkeit mechanisch erfolgen, beispielsweise unter Ausnützung der Schwerkraft, von Kapillarkräften, von Wind oder vom Fahrtwind eines Fahrzeuges. In einer bevorzugten Ausführungsform der Erfindung sind Mittel vorhanden, welche die Ableitung der Flüssigkeit mechanisch, d.h. ohne direkte Zuführung elektrischer Energie, unterstützen.

In einer weiteren bevorzugten Ausführungsform der Erfindung ist die Flüssigkeitsabfuhrvorrichtung so ausgestaltet und/oder angebracht, dass bei Bewegung der Energiespeichervorrichtung mit der Flüssigkeitsabfuhrvorrichtung durch den Fahrtwind die Verdunstung der Flüssigkeit an der Außenseite der Vorrichtung unterstützt wird. Diese Ausführungsform ist besonders geeignet, wenn die Energiespeichervorrichtung Bestandteil eines Kraftfahrzeugs, eines Flugzeugs oder einer sonstigen beweglichen Maschine ist. In einer bevorzugten Ausführungsform ist die Flüssigkeitsabfuhrvorrichtung so positioniert bzw. ausgestaltet, dass der Luftstrom entlang der Flüssigkeitsabfuhrvorrichtung einen effizienten Abtransport der Flüssigkeit bewirkt. Dabei können unterstützend geeignete Mittel zum Abtransport der Flüssigkeit vorhanden sein, wie Kanäle zur Luftzufuhr und Luftabfuhr, Laval-Düsen und Einrichtungen, welche die Bildung von rückseitigen Wirbeln unterstützen. Im Hinblick auf die Entstehung eines Fahrtwinds wird auch die Positionierung der Flüssigkeitsabfuhrvorrichtung unter oder neben dem Gehäuse der Energiespeichervorrichtung vorgenommen.

In einer bevorzugten Ausführungsform der Erfindung weist die Flüssigkeitsabfuhrvorrichtung außen, insbesondere an der Auslassöffnung, ein Drehelement auf. Ein solches Drehelement ist beispielsweise ein Rotor oder ein Windrad, das durch Wind, insbesondere Fahrtwind, in Bewegung gesetzt wird und die Verdunstung der Flüssigkeit unterstützt.

In einer besonders bevorzugten Ausführungsform ist das Drehelement als "Schleuderrad" ausgebildet, das sich im Fahrtwind dreht und aus der Flüssigkeitsabfuhrvorrichtung austretende Flüssigkeitströpfchen mechanisch weg von der Flüssigkeitsabfuhrvorrichtung schleudert. Ein solches Schleuderrad kann eine beschichtete Oberfläche aufweisen, die zu einer möglichst geringen Benetzbarkeit führt und das Risiko der Verschmutzung vermindert (beispielsweise über den Lotus-Effekt).

Die Zufuhr der Flüssigkeit zu der Flüssigkeitsabfuhrvorrichtung kann durch zusätzliche Maßnahmen unterstützt werden. So kann in und an der Energiespeichervorrichtung über die Kühlung gewährleistet werden, dass in der Nähe der Flüssigkeitsableitungsvorrichtung eine besonders niedrige Temperatur herrscht. Dadurch wird gewährleistet, dass in unmittelbarer Nähe der Flüssigkeitsableitungsvorrichtung eine besonders intensive Kondensation stattfindet. Bevorzugt ist im Boden der Energiespeichervorrichtung eine Sicke vorgesehen und/oder der Boden weist ein Gefälle hin zur Einlassöffnung der Flüssigkeitsabfuhrvorrichtung auf. Bei der Ausgestaltung des Bodens der Energiespeichervorrichtung und der Einlassöffnung, welche die Energiespeichervorrichtung mit der Flüssigkeitsabfuhrvorrichtung verbindet, kann ausgenutzt werden, dass sich bei der Bewegung von Kraftfahrzeugen oder sonstigen beweglichen Maschinen auch die Flüssigkeit, insbesondere das Kondenswasser, im Inneren der Energiespeichervorrichtung bewegt. Bevorzugt wird die Einlassöffnung zur Ableitung der Flüssigkeit relativ weit vorne im Gehäuse der Energiespeichervorrichtung positioniert, da bei Bremsbewegungen und Beschleunigungsbewegungen relativ häufig eine Bewegung der Flüssigkeit in den vorderen Teil der Flüssigkeitsabfuhrvorrichtung erfolgt. Die Flüssigkeitszufuhr im Boden der Energiespeichervorrichtung kann beispielsweise durch eine hydrophobe Beschichtung unterstützt werden, welche die Ausbildung und Bewegung von Tropfen unterstützt.

In einer Ausführungsform der Erfindung wird die Verdunstung der Flüssigkeit in der Flüssigkeitsabfuhrvorrichtung durch ein Heizelement unterstützt. Dieses kann beispielsweise oberhalb oder innerhalb der flüssigkeitsabsorbierenden Schicht angebracht werden. Bevorzugt wird das Heizelement zwischen dem Gehäuse und der wasserableitenden Schicht angebracht, da dadurch der Wasserdampf nach außen aus der Flüssigkeitsabfuhrvorrichtung gedrückt wird. Bevorzugt ist eine Anbringung abwindig vom Fahrtwind.

Das Heizelement kann beispielsweise als Folienheizung ausgestaltet sein, beispielsweise auf Basis einer porösen Folie auf der Basis von Polyester oder Polyimid. Solche Folienheizelemente weisen bevorzugt eine poröse und ggf. dehnbare Struktur auf, was die Einarbeitung in die erfindungsgemäße Flüssigkeitsabfuhrvorrichtung passgenau ermöglicht. Bevorzugt wird das Heizelement erst bei Unterschreiten einer definierten Temperatur, beispielsweise ab 0°C, eingeschaltet. Auf diese Weise können Frostschäden oder Inaktivierung der Flüssigkeitsabfuhrvorrichtung durch Eis verhindert werden. Das Heizelement kann beispielsweise durch eine Photovoltaikzelle oder eine sonstige autarke Energieeinheit, wie ein Windrad, betrieben werden. Gegebenenfalls wird ein angemessen dimensionierter Energie-Zwischenspeicher verwendet.

In einer weiteren bevorzugten Ausführungsform nutzt das Heizelement Abwärme eines Motors, eines elektrischen Wandlers oder der Energiespeichervorrichtung. Auf diese Weise ist keine zusätzliche elektronische Komponente erforderlich. Als Heizelement oder in Kombination mit einem Heizelement kann ein Föhn eingesetzt werden, beispielsweise in Form eines kleinen Gebläses oder Ventilators zur Beschleunigung der Verdunstung.

Gegenstand der Erfindung ist auch eine Energiespeichervorrichtung zur Speicherung von elektrischer oder elektrochemischer Energie, insbesondere eine Batterie oder ein Kondensator, umfassend eine erfindungsgemäße Flüssigkeitsabfuhrvorrichtung zur Entfernung von Flüssigkeiten aus der Energiespeichervorrichtung.

Gegenstand der Erfindung ist auch die Verwendung einer erfindungsgemäßen Flüssigkeitsabfuhrvorrichtung zur Entfernung von Flüssigkeit aus einer Energiespeichervorrichtung zur Speicherung von elektrischer oder elektrochemischer Energie, insbesondere einer Batterie oder eines Kondensators. Darüber hinaus lässt sich die Erfindung auch auf weitere Applikationen übertragen, in deren Inneren sich Kondensat oder sonstige Flüssigkeit bilden kann, deren maximale Arbeitstemperaturen allerdings so gering sind, dass dieses Kondensat nicht effektiv aus dem Inneren wieder verdunstet.

### Kurzbeschreibung der Zeichnungen

Die folgenden Figuren zeigen beispielhaft und schematisch bevorzugte Ausführungsformen der Erfindung.
- Figur 1:: zeigt verschiedene Anordnungen a) bis d) von erfindungsgemäßen Flüssigkeitsabfuhrvorrichtungen am Gehäuse einer Energiespeichervorrichtung.
- Figur 2:: zeigt einen Querschnitt durch einen Teilbereich einer erfindungsgemäßen Flüssigkeitsabfuhrvorrichtung.
- Figur 3:: zeigt den unteren Teil eines Querschnitts durch eine erfindungsgemäße Flüssigkeitsabfuhrvorrichtung mit einer flüssigkeitsabsorbierenden Einrichtung und einer porösen Schutzschicht.
- Figur 4:: zeigt den unteren Abschnitt eines Querschnitts der erfindungsgemäßen Flüssigkeitsabfuhrvorrichtung mit einem Außenschutz in Form eines Rohrs (4a) und einer Kappe (4b).
- Figur 5:_: zeigt im Querschnitt den unteren Abschnitt einer erfindungsgemäßen Flüssigkeitsabfuhrvorrichtung mit Überdruckventil in Form eines Deckels (5a) und eines magnetischen Ventils (5b).
- Figur 6:: zeigt den Aufbau eines Rückschlagventils in einer erfindungsgemäßen Flüssigkeitsabfuhrvorrichtung mit einem Schwimmer (6a), den zylindrischen Schwimmer in der Seitenansicht (6b) und in der Aufsicht (6c).
- Figur 7:: zeigt einen detaillierten Querschnitt durch eine erfindungsgemäße Flüssigkeitsabfuhrvorrichtung mit einem Dichtelement, das auf einer Membran aufgebracht ist, und wasserableitende Schichten im Bodenbereich.
- Figur 8:: zeigt Ausgestaltungen eines Rückschlagventils in einer erfindungsgemäßen Flüssigkeitsabfuhrvorrichtung mit einem nippelförmigen Dichtelement auf einer Membran (8a) und einem Dichtring auf einer Membran (8b).
- Figur 9:: zeigt ein Dichtelement in Form einer Membran (9a) und in Form eines Nippels auf Membran mit Feder (9b).
- Figur 10:: zeigt ein Dichtelement mit Schwimmer und Verbindungselement.
- Figur 11:: zeigt ein trägheitsgesteuertes Ventil, das beim Bremsen öffnet und über eine Feder schließt.
- Figur 12:: zeigt eine Membran mit stoffschlüssig verbundener, flüssigkeitsabsorbierender Schicht (12a) und mit zusätzlicher poröser Schutzschicht (12b).
- Figur 13:: zeigt eine erfindungsgemäße Anordnung mit Rückschlagventil, mit der das Ventil außerhalb der flüssigkeitsabsorbierenden Schicht vorgesehen ist.
- Figur 14:: zeigt eine erfindungsgemäße Flüssigkeitsabfuhrvorrichtung gemäß Figur 7 mit Sensoren.
- Figur 15:: zeigt eine erfindungsgemäße Flüssigkeitsabfuhrvorrichtung mit zusätzlichem Drehelement
- Figur 16:: zeigt eine erfindungsgemäße Flüssigkeitsabfuhrvorrichtung mit senkrechter flüssigkeitsabsorbierender Schicht.
- Figur 17:: zeigt verschiedene Anordnungen der erfindungsgemäßen Flüssigkeitsabfuhrvorrichtung an einer Energiespeichervorrichtung, bei denen die Fortbewegung der Energiespeichervorrichtung die Flüssigkeitsableitung unterstützt.

Nachfolgend werden bevorzugte Ausführungsformen der Erfindung anhand der Figuren beispielhaft erläutert.

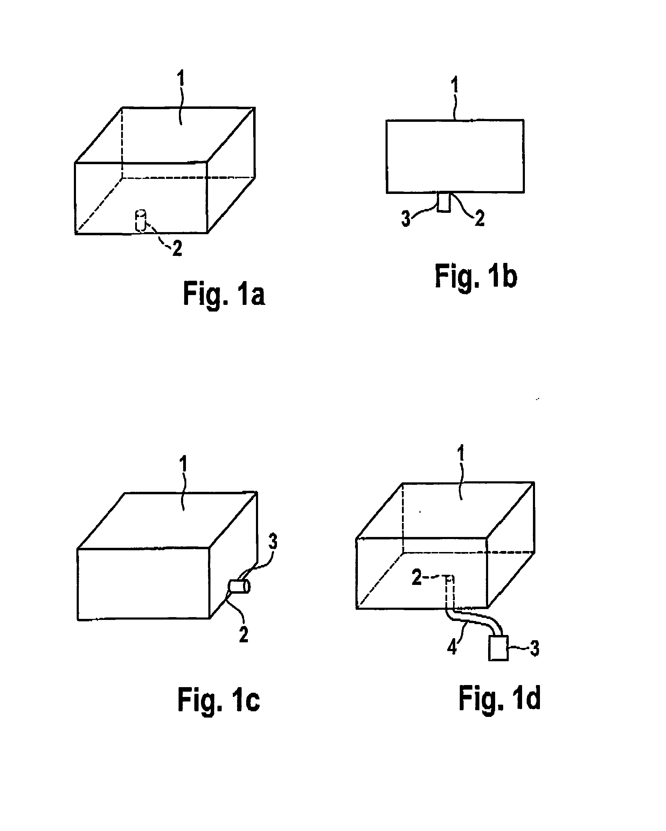

Fig. 1 zeigt verschiedene Möglichkeiten, eine erfindungsgemäße Flüssigkeitsabfuhrvorrichtung 3 an ein Gehäuse 1 einer Energiespeichervorrichtung anzubringen. In Fig. 1 a ist eine Anbringung unterhalb des Gehäuses dargestellt. Fig. 1b zeigt eine seitliche Ansicht. Fig. 1c zeigt eine seitliche Anbringung. Diese erfolgt im unteren Bereich, damit Wasser hineinfließen kann. Fig. 1d zeigt eine räumlich getrennte Anbringung mit einer Schlauch- oder Rohrverbindung 4. Es wird jeweils durch eine Einlassöffnung 2 in der Außenwand der Flüssigkeitsabfuhrvorrichtung gewährleistet, dass Flüssigkeit aus der Energiespeichervorrichtung 1 in die Flüssigkeitsabfuhrvorrichtung eindringen kann.

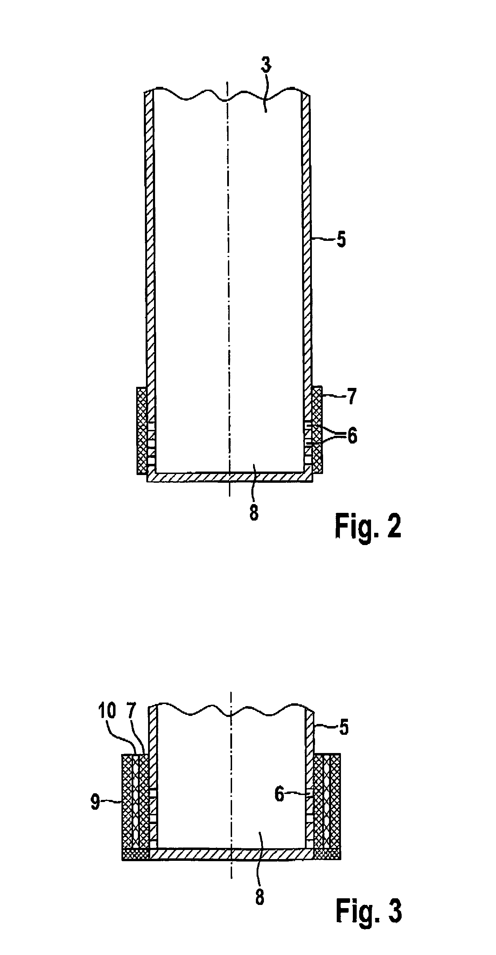

Eine beispielhafte schematische Flüssigkeitsabfuhrvorrichtung 3 ist in Fig. 2 dargestellt Die Flüssigkeitsabfuhrvorrichtung weist seitliche Außenwände 5 auf, die zumindest in Teilbereichen Auslassöffnungen 6 aufweisen. Durch diese kann Flüssigkeit aus einer Energiespeichervorrichtung, die in das Innere der Flüssigkeitsabfuhrvorrichtung eingetreten ist, zur flüssigkeitsabsorbierenden Einrichtung 7 gelangen, die seitlich am Boden 8 der Flüssigkeitsabfuhrvorrichtung angeordnet ist. In Fig. 2 ist die flüssigkeitsabsorbierende Einrichtung 7 schematisch als Schicht dargestellt, die beispielsweise aus einem Vliesstoff besteht.

Fig. 3 zeigt eine Flüssigkeitsabfuhrvorrichfung mit den Merkmalen von Fig. 2, wobei zusätzlich eine poröse Schutzschicht 9 auf der flüssigkeitsabsorbierenden Einrichtung 7 aufgebracht ist, die durch Abstandhalter 10 räumlich von dieser getrennt ist. Bei der gezeigten Ausführungsform ist die flüssigkeitsabsorbierende Einrichtung 7 als Schicht ausgebildet. Die flüssigkeitsabsorbierende Schicht leitet die Flüssigkeit- aus dem Inneren nach außen weiter, während die poröse Schutzschicht 9 das Austreten von Wasserdampf ermöglicht, jedoch das Eintreten von Flüssigkeiten verhindert und zudem eine mechanische Schutzwirkung entfaltet.

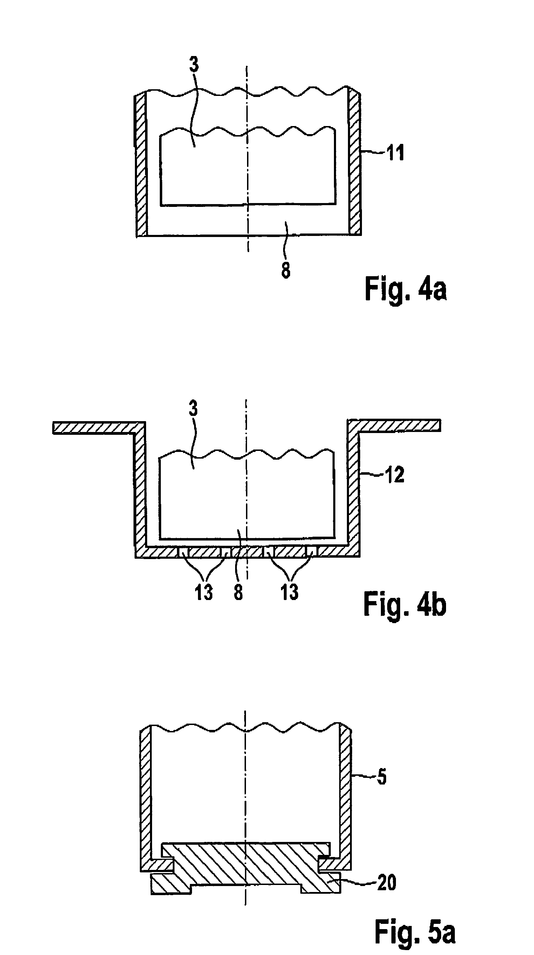

Wie in Fig. 4 beispielhaft gezeigt wird, kann eine Flüssigkeitsabfuhrvorrichtung 3 gemäß Fig. 2 oder Fig. 3 durch einen zusätzlichen Außenschutz 11, 12 stabilisiert und gegen Einwirkungen von mechanischen Kräften sowie gegen Verschmutzung und Bespritzen mit Flüssigkeiten etc, geschützt werden. In Fig. 4a ist der Außenschutz schematisch als Rohr 11 und in Fig. 4b als zylinderförmige Kappe (12), die Löcher (13) im Außenschutz enthält, dargestellt.

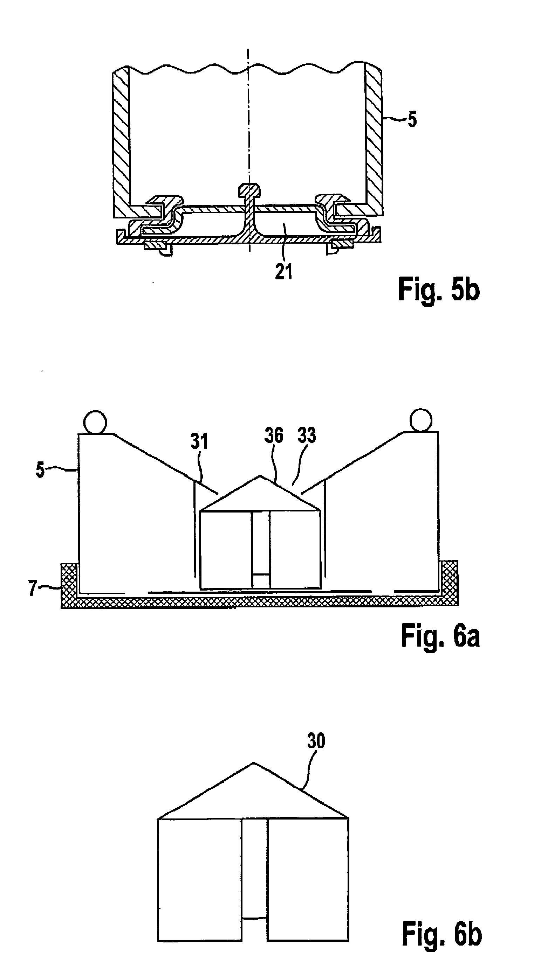

Figur 5 zeigt eine Flüssigkeitsabfuhrvorrichtung mit Außenwänden 5, an deren Unterseite ein Überdruckventil 20, 21 angebracht ist. Fig. 5a zeigt eine Ausgestaltung als Deckel 20 und Fig. 5b als magnetisches Ventil 21.

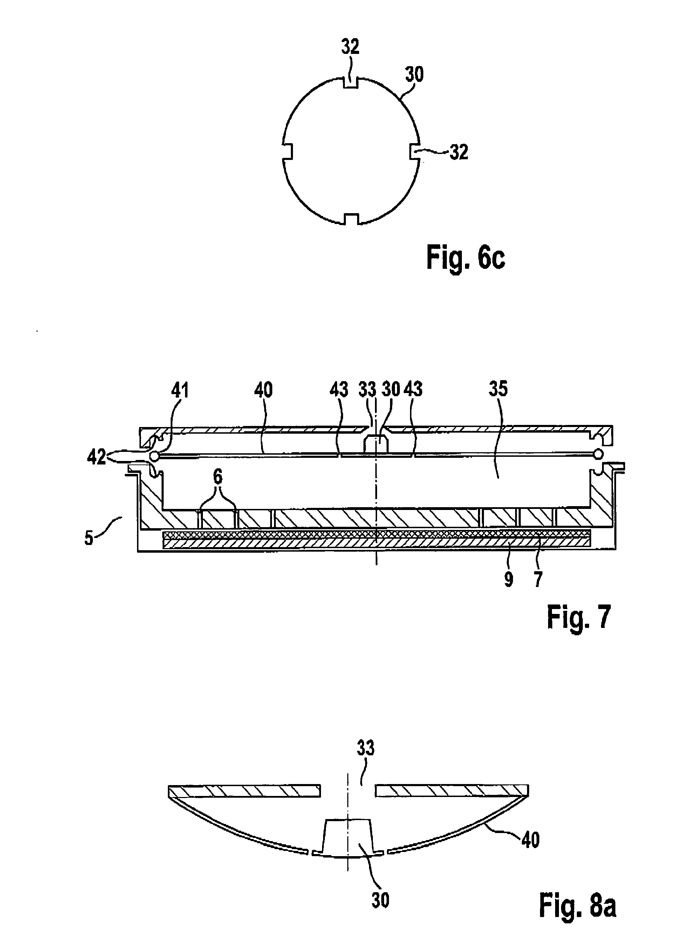

Figur 6 zeigt eine erfindungsgemäße Flüssigkeitsabfuhrvorrichtung mit flüssigkeitsabsorbierenden Einrichtung 7, hier als Schicht ausgebildet, und Außenwänden 5. Das Rückschlagventil umfasst gemäß Fig. 6a ein Dichtelement, das als Schwimmer 36 ausgebildet ist, und einen Durchlass für Flüssigkeit 33, wie Kondenswasser. Beim unerwünschten Eindringen von Flüssigkeit von außen in das Innere wird der Schwimmer 36 angehoben und liegt an den Überständen 31 der Gegenfläche an, wodurch der Durchlass für Flüssigkeit 33 verschlossen wird. Fig. 6b zeigt eine Seitenansicht des zylindrischen Schwimmers 36 und Fig. 6c eine Aufsicht mit koaxialen Kanälen 32, die den Abfluss der Flüssigkeit, wie des Kondensats, im geöffneten Zustand erlauben und im geschlossenen Zustand geschlossen sind. Der Schwimmer 36 kann aus einem Thermoplast, einem Elastomer oder thermoplastischen Elastomer bestehen bzw. lokale Dichtungen aus diesen Materialien besitzen. Er kann bevorzugt auch kugelförmig ausgebildet sein. Alternativ bzw. zusätzlich hierzu kann auch der Berührungspunkt der Überstände 31 mit dem Schwimmer 36 eine umlaufende Dichtung aufweisen. Unter Umständen kann es ausreichen, die Überstände 31 aus einer flexiblen Struktur, z.B. einer thermoplastischen Folie auszugestalten, die beim Andruck des Schwimmers dichtend wirken. Denkbar ist auch, dass der Schwimmer 36 mit einer Feder oder aufgrund seines geringen spezifischen Gewichtes im Normalzustand bereits leicht an die Gegenfläche angepresst ist und erst durch zusätzliche Gewichtseinwirkung von anstehender Flüssigkeit nach unten bewegt wird und damit öffnet. Eine solche Anordnung ist beispielsweise vorteilhaft, wenn ein hohes Risiko bezüglich von außen anstehendem Wasser besteht. Der Schwimmer ist dann im Normalzustand "geschlossen".

Figur 7 zeigt eine erfindungsgemäße Flüssigkeitsabfuhrvorrichtung mit flüssigkeitsabsorbierenden Einrichtung 7, poröser Schicht 9, Außenwänden 6 und Auslassöffnungen 6. Die Flüssigkeit wird als Dampf über die poröse Schicht 9 in die Umgebung abgegeben. Ein Rückschlagventil umfasst eine Membran 40, die mit Dichtnippeln 41 in Öffnungen zur Aufnahme der Dichtnippel 42 des Gehäuses einrastbar und befestigbar ist. Auf der Membran 40 ist ein Dichtelement 30 angebracht. Die Membran 40 weist Hohlräume zum Flüssigkeitstransfer 43 auf, beispielsweise in Form von Poren, und ist dadurch flüssigkeitsdurchlässig. Beim Eindringen von Flüssigkeit von außen und Akkumulation im Hohlraum 35 fungiert die Membran mit dem Dichtelement als Schwimmer und verschließt durch Bewegung nach oben den Durchlass für Flüssigkeit 33. Bei Abführung der Flüssigkeit erfolgt das Absenken der Membran 40 und die emeute Öffnung des Durchlasses 33, so dass wieder Flüssigkeit, wie Kondenswasser, aus der Energiespeichervorrichtung in die Flüssigkeitsabfuhrvorrichtung gelangen kann.

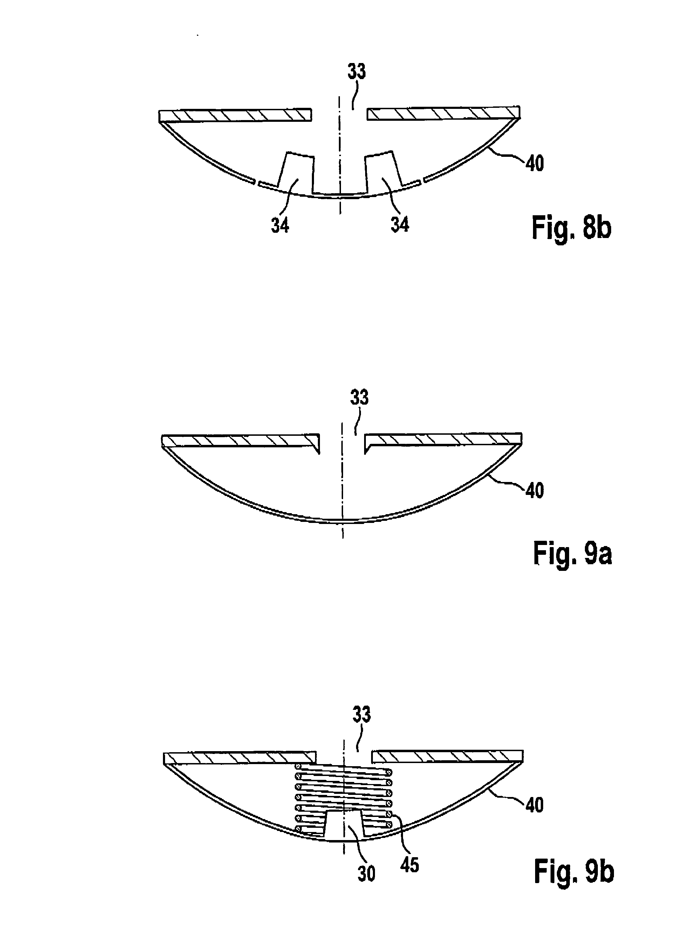

Figur 8a zeigt ein Rückschlagventil mit einer Membran 40, einem Dichtelement 30 und einem Durchlass für Flüssigkeit 33, wie Kondenswasser. Figur 8b zeigt eine alternative Anordnung mit einem Dichtring 34 auf einer Membran 40. Figur 9a zeigt eine alternative Anordnung mit Membran 40 ohne zusätzliches Dichtelement. Bei dieser Ausgestaltung dichtet die Membran selbst den Durchlass 33 ab. Figur 9b zeigt eine alternative Anordnung mit Membran 40, Dichtelement 30 und einer Feder 45 zur Vorspannung. Eine solche Feder kann bewirken, dass sich die Membran 40 sich einfacher wieder in die Ausgangslage bewegt.

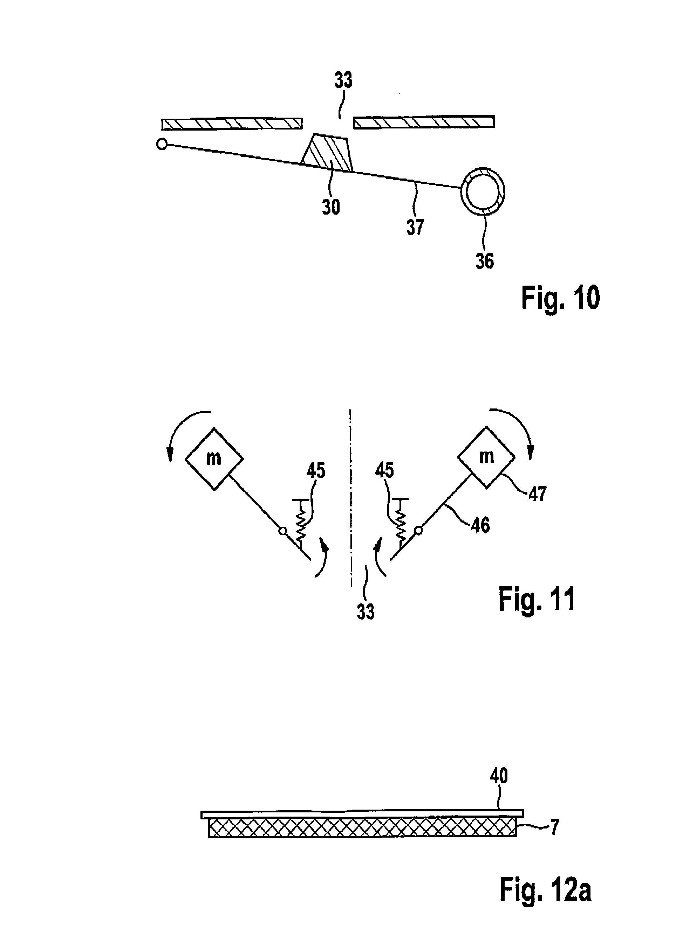

Figur 10 zeigt ein Rückschlagventil mit Dichtelement 30 und einem zusätzlichen Schwimmer 36, der über ein Verbindungselement 37 mit dem Dichtelement 30 verbunden ist.

Fig. 11 zeigt schematisch ein trägheitsgesteuertes Ventil 46, das bei Stillstand des Kraftfahrzeugs geschlossen ist und das sich bei einer Bewegung der Energiespeichervorrichtung durch Verzögem des Kraftfahrzeugs kurzzeitig öffnet, um Flüssigkeit, wie Kondenswasser, in die Flüssigkeitsabfuhrvorrichtung einzulassen. Dabei zeigt Fig. 11 den geöffneten Zustand. Beim Entschleunigen, insbesondere beim Bremsen, wird durch die Bewegung der beweglichen Masseelemente 47 mit daran angebrachten Wandungen 48 der Durchlass für Flüssigkeit 33 geöffnet, während bei Stillstand das Verschließen über die Fedem 45 erfolgt.

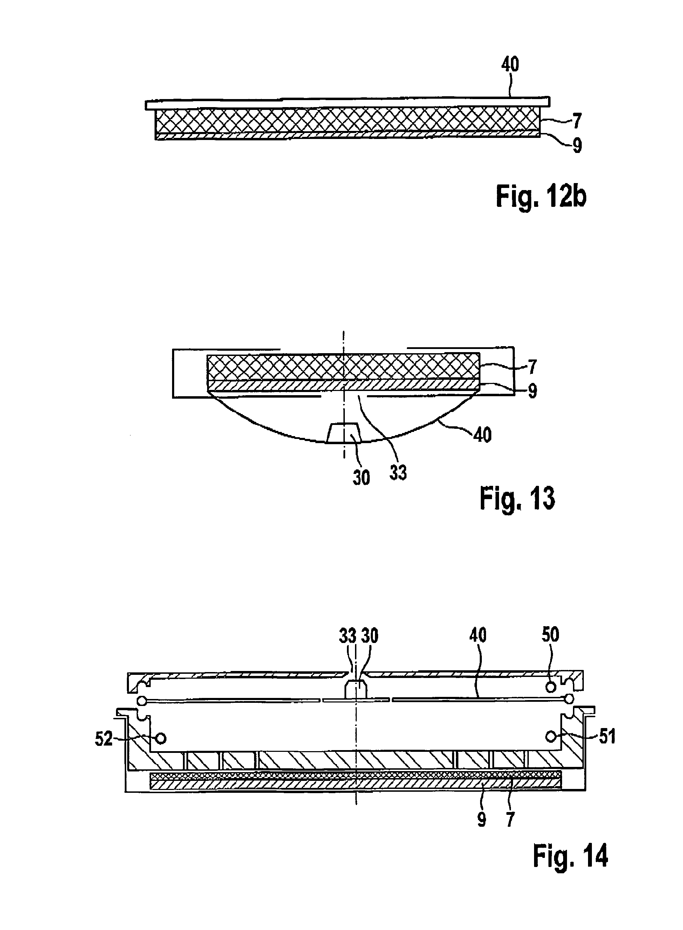

Fig. 12a zeigt schematisch ein Laminat aus einer Membran 40, die Bestandteil eines Rückschlagventils ist, mit einer flüssigkeitsabsorbierenden Einrichtung 7, die als Schicht ausgebildet Ist, insbesondere aus Vliesstoff. Fig. 12b zeigt ein entsprechendes Laminat, das zusätzlich eine poröse Schutzschicht 9 aufweist. Bei Verbindung der Membran 40 des Rückschlagventils mit der flüssigkeitsabsorbierenden Einrichtung 7, die als Schicht ausgebildet ist, kann eine besonders platzsparende und einfache Anordnung erzielt werden. Erfindungsgemäß ist es bevorzugt, dass das Rückschlagventil so ausgestaltet ist, dass es einen Durchlass für Flüssigkeit verschließt, der vor der flüssigkeitsabsorbierenden Einrichtung positioniert ist. In einer weiteren in Fig. 13 gezeigten Ausführungsform der Erfindung kann jedoch das Rückschlagventil auch einen Durchlass für Flüssigkeit 33 verschließen, welcher der flüssigkeitsabsorbierenden Einrichtung 7 und gegebenenfalls auch der porösen Schutzschicht 9 nachgeschaltet ist. Mit einem solchen nachgeschalteten Rückschlagventil kann das Verdampfen der Flüssigkeit aus der Flüssigkeitsabfuhrvorrichtung verhindert werden. Eine solche Anordnung hat den Vorteil, dass das Eindringen der Flüssigkeit von außen in die flüssigkeitsabsorbierende Einrichtung 7 verhindert werden kann.

Die erfindungsgemäße Flüssigkeitsabfuhrvorrichtung kann Sensoren enthalten, die Signale über den Zustand der Flüssigkeitsabfuhrvorrichtung aussenden. In Fig. 14 ist eine Flüssigkeitsabfuhrvorrichtung mit den Merkmalen von Fig. 7 dargestellt, die zusätzlich drei Sensoren 50, 51 und 52 aufweist. Dabei zeigt ein Überladungssensor 50 die Ansammlung von Flüssigkeit innerhalb des Rückschlagventils an. Ein Flüssigkeitssensor 51 zeigt die Ansammlung von Flüssigkeit nach dem Rückschlagventil an. Der Flüssigkeitssensor 51 kann gleichzeitig aus der Umgebung eingedrungene Flüssigkeit detektieren. Ein Temperatursensor 52 kann beispielsweise eingesetzt werden, um Vereisung festzustellen. Über Detektionseinrichtungen können die Signale erfasst werden und gegebenenfalls Maßnahmen eingeleitet werden, wie das Einschalten einer Heizeinrichtung bei Unterschreiten einer kritischen Temperatur oder einer zu hohen Menge an flüssigem Wasser.

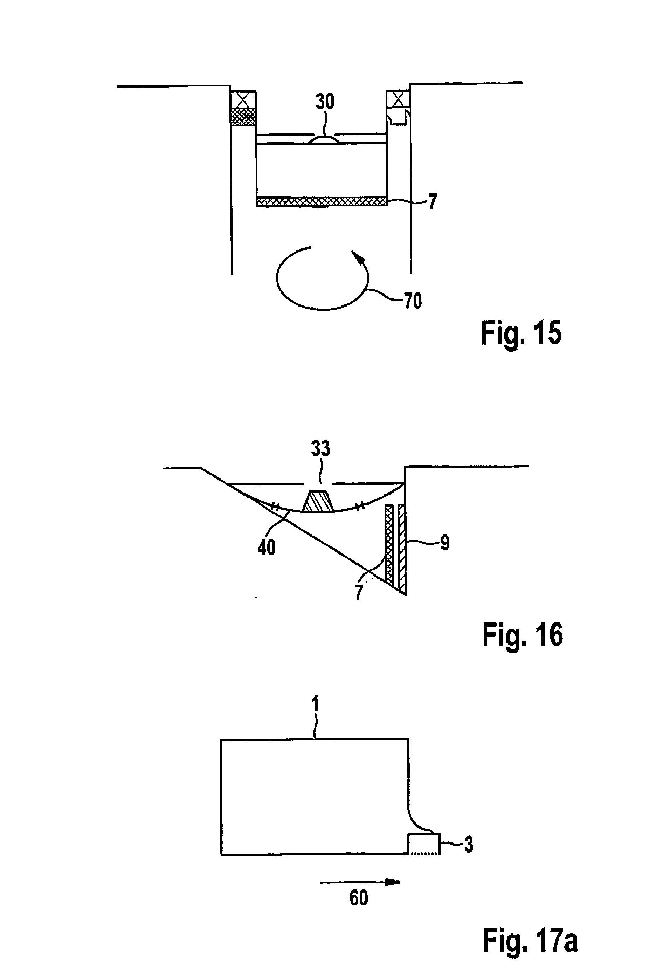

Fig. 15 zeigt eine Flüssigkeitsabfuhrvorrichtung mit einem Rückschlagventil, das ein Dichtelement 30 aufweist. Unterhalb der flüssigkeitsabsorbierenden Einrichtung 7, die als Schicht ausgebildet ist, ist ein Drehelement 70 positioniert, das den austretenden Wasserdampf von der Flüssigkeitsabfuhrvorrichtung wegleitet.

Fig. 16 zeigt eine Flüssigkeitsabfuhrvorrichtung mit Rückschlagventil aus einem Dichtelement und einer Membran 40, wobei das Dichtelement einen Durchlass für Flüssigkeit 33 verschließt. Die flüssigkeitsabsorbierende Einrichtung 7, hier als Schicht ausgebildet, und die poröse Schutzschicht 9 sind senkrecht angeordnet. Eine solche Anordnung erlaubt eine andere Kinetik bei der Ableitung der Flüssigkeit und eine effiziente Aufnahme kleiner Flüssigkeitsmengen wegen der Akkumulation im Bodenbereich.

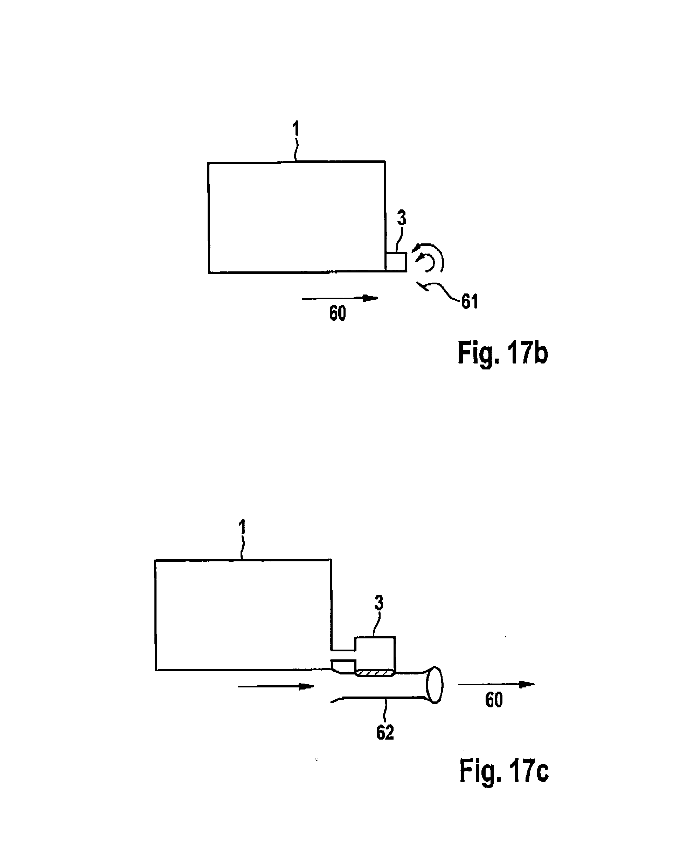

Figur 17 zeigt eine Energiespeichervorrichtung 1 mit daran angebrachter Flüssigkeitsabfuhrvorrichtung 3. Die Energiespeichervorrichtung 1 kann eine Batterie sein, die in einem Kraftfahrzeug positioniert ist, das Fahrtwind In Richtung der Pfeils 60 erzeugt. Die Abfuhr der Flüssigkeit lässt verbessern, wenn Flüssigkeitsabfuhrvorrichtung 3 an einer Position angebracht wird, an der der Fahrtwind stark ist (Fig. 17a), oder gezielt umgelenkt wird, beispielsweise gemäß Fig. 17b mit einem rückwärtigen Wirbel 61, oder gemäß Fig. 17c mit einer Düse 62, die beispielsweise eine Laval-Düse ist. Durch solche Maßnahmen wird die Verdunstung an den Außenbereichen der Flüssigkeitsabfuhrvorrichtungen, an denen die Verdunstung erfolgt, gefördert.

Die erfindungsgemäßen Vorrichtungen und Verwendungen lösen die Aufgaben, denen die Erfindung zugrunde legt. Die Flüssigkeitsabfuhrvorrichtungen erlauben die einfache und effiziente Abfuhr von Kondenswasser und sonstigen Flüssigkeiten aus dem Inneren einer Batterie oder sonstigen Energiespeichervorrichtung. Die Abfuhr kann rein mechanisch und kontinuierlich erfolgen.

### Ausführungsbeispiel:

Maßgeblich für die Auswahl des Vlieses ist die Fähigkeit, innerhalb von kurzer Zeit eine möglichst große Wassermenge abzugeben. Zur Ermittlung geeigneter Vliesstoffe wurden verschiedene Vliesstoffe in destilliertes Wasser gelegt, bis sie vollständig durchnässt waren. Anschließend wurden die Proben mit einer Klammer vertikal aufgehängt und in vorgegebenen Zeitabständen gewogen. es wurden verschiedene kommerziell erhältliche Vliese der Freudenberg Vliesstoffe KG aus organischen Polymeren eingesetzt. Die Probestücke wiesen eine Ausdehnung von 140 x 50 mm (70 cm²) auf bei Dicken von etwa 0,2 bis 1 mm und die Versuche erfolgten bei 23°C und 50% Luftfeuchtigkeit. Gemessen wurde die Wasserabgabe nach 15 min in Gramm und in Prozent. Die Ergebnisse und die Bedingungen sind in Tabelle 1 zusammengefasst. Dabei sind Vliese besonders geeignet, die innerhalb von 15 Minuten eine möglichst hohe Wassermenge abgeben (wie gemäß Beispiel 7). Solche Vliesstoffe können besonders effizient relativ große Wassermengen aus einer Flüssigkeitsabfuhrvorrichtung in die Umgebung transportieren.

**Tabelle 1: Vliesstoffe und Ergebnisse**

| **Bsp** | **Vlies** | **Gew. trocken [g]** | **Gew. nass [g]** | **Wasser abgabe [g]** | **Wasser abgabe [%]** |
|---|---|---|---|---|---|
| 1 | ST 170 FC BA 650325/04 | 0,45 | 1,09 | 0,52 | 0,81 |
| 2 | ST 170 FC BA 493538/01 | 0,54 | 1,28 | 0,57 | 0,77 |
| 3 | ST 171 FC blau BA650519/02 | 0,60 | 1,50 | 0,61 | 0,68 |
| 4 | ST 3270 BP 650338/01 | 3,00 | 4,55 | 0,48 | 0,31 |
| 5 | EVO 60 FC | 0,40 | 0,82 | 0,3E | 0,86 |
| 6 | EVO 130 | 0,84 | 3,08 | 0,56 | 0,25 |
| 7 | FS 2190 | 0,31 | 1,07 | 0,67 | 0,88 |
| 8 | Cooltexx | 1,07 | 6,00 | 0,20 | 0,04 |
| 9 | FFA2037 | 1,17 | 2,94 | 0,26 | 0,15 |

### Bezugszeichenliste

- (1): Energiespeichervorrichtung
- (2): Einlassöffnung
- (3): Flüssigkeitsabfuhrvorrichtung
- (4): Schlauch
- (5): Außenwand
- (6): Auslassöffnung
- (7): flüssigkeitsabsorbierende Einrichtung
- (8): Bodenbereich
- (9): poröse Schutzschicht
- (10): Abstandshalter
- (11): Außenschutz Rohr
- (12): Außenschutz Kappe
- (13): Löcher Außenschutz
- (20): Überdruckventil Deckel
- (21): Überdruckventil magnetisch
- (30): Dichtelement
- (31): Überstand Gegenfläche
- (32): koaxiale Kanäle
- (33): Durchlass Flüssigkeit
- (34): Dichtring
- (35): Hohlräume
- (36): Schwimmer
- (40): Membran
- (41): Dichtnippel
- (42): Öffnung zur Aufnahme Dichtnippel
- (43): Hohlräume Membran zum Flüssigkeitstransfer
- (44): Dichtring
- (45): Feder
- (46): Trägheitsgesteuertes Ventil
- (47): bewegliche Massenelemente
- (48): Wandung
- (50): Überladungssensor
- (51): Flüssigkeitssensor
- (52): Temperatursensor
- (60): Richtung Fahrtwind
- (61): Rückwärtiger Wirbel
- (62): Düse
- (70): Drehelement

## Patentansprüche

1. Flüssigkeitsabfuhrvorrichtung (3), insbesondere zur Entfernung von Flüssigkeit aus einer Energiespeichervorrichtung (1), wobei die Flüssigkeitsabfuhrvorrichtung (3) mit der Energiespeichervorrichtung (1) verbindbar ist, wobei die Flüssigkeitsabfuhrvorrichtung (3) mindestens eine Einlassöffnung (2) aufweist, durch die Flüssigkeit aus der Energiespeichervorrichtung (1) in die Flüssigkeitsabfuhrvorrichtung (3) gelangen kann, wobei die Flüssigkeitsabfuhrvorrichtung (3) eine flüssigkeitsabsorbierende Einrichtung (7) enthält, die Flüssigkeit an die Umgebung abgeben kann.

2. Flüssigkeitsabfuhrvorrichtung (3) nach Anspruch 1, wobei die flüssigkeitsabsorblerende Einrichtung (7) ein Vliesstoff, ein Gewebe, ein Netz, ein Papier, eine flüssigkeitsdurchlässige Membran und/oder eine Partikelschüttung ist.

3. Flüssigkeitsabfuhrvorrichtung (3) nach mindestens einem der vorhergehenden Ansprüche, die zusätzlich eine poröse Schutzschicht (9) aufweist, die zwischen der flüssigkeitsabsorbierenden Einrichtung (7) und der Umgebung angeordnet ist, wobei die poröse Schutzschicht (9) wasserdampfdurchlässig und flüssigkeitsundurchlässig ist.

4. Flüssigkeitsabfuhrvorrichtung (3) nach mindestens einem der vorhergehenden Ansprüche, wobei die poröse Schutzschicht (9) ein Vlies, ein Netz, ein Gewebe oder eine Membran ist und gegebenenfalls hydrophobiert und/oder oleophobiert ist,

5. Flüssigkeitsabfuhrvorrichtung (3) nach mindestens einem der vorhergehenden Ansprüche, wobei die Flüssigkeitsabfuhrvorrichtung (3) eine äußere Schutzhülle (11, 12) aufwelst.

6. Flüssigkeitsabfuhrvorrichtung (3) nach mindestens einem der vorhergehenden Ansprüche, die ein Rückschlagventil aufweist, das den Flüssigkeitstransport aus der Energiespeichervorrichtung in die Umgebung unterbricht, wenn Flüssigkeit aus der Umgebung in die Flüssigkeitsabfuhrvorrichtung (3) eindringt.

7. Flüssigkeitsabfuhrvorrichtung (3) nach Anspruch 6, wobei das Rückschlagventil ein Dichtelement (30) aufweist, das in Gegenwart von Flüssigkeit einen Durchlass (33) der Flüssigkeit von außen in die Energiespeichervorrichtung (1) verhindert.

8. Flüssigkeitsabfuhrvorrichtung (3) nach Anspruch 7, wobei das Dichtelement (30) zylindrisch, kugelförmig, kegelförmig oder ringförmig ausgebildet ist und/oder wobei das Dichtelement (30) auf einer porösen bzw. definierte Löcher enthaltenden Membran (40) angebracht ist.

9. Flüssigkeitsabfuhrvorrichtung (3) nach Anspruch 8, umfassend ein Laminat aus einer flüssigkeitsdurchlässigen Membran (40), einer flüssigkeitsabsorbierenden Einrichtung (7) und gegebenenfalls einer porösen Schutzschicht (9).

10. Flüssigkeitsabfuhrvorrichtung (3) nach mindestens einem der vorhergehenden Ansprüche, wobei die Flüssigkeitsabfuhrvorrichtung (3) ein Sicherheitsventil (20, 21) aufweist, das sich bei einem definierten Überdruck öffnet.

11. Flüssigkeitsabfuhrvorrichtung (3) nach mindestens einem der vorhergehenden Ansprüche, die mindestens einen Sensor (50, 51, 52) aufweist

12. Flüssigkeitsabfuhrvorrichtung (3) nach mindestens einem der vorhergehenden Ansprüche, die an der Außenseite ein Drehelement aufweist.

13. Flüssigkeitsabfuhrvorrichtung (3) nach mindestens einem der vorhergehenden Ansprüche, wobei die Entfernung der Flüssigkeit ohne Zuführung elektrischer Energie erfolgt.

14. Energiespeichervorrichtung zur Speicherung von elektrischer oder elektrochemischer Energie, insbesondere in Form einer Batterie, einer Brennstoffzelle oder eines Kondensators, umfassend eine Flüssigkeitsabfuhrvorrichtung (3) gemäß mindestens einem der vorhergehenden Ansprüche.

15. Verwendung einer Flüssigkeitsabfuhrvorrichtung (3) gemäß mindestens einem der Ansprüche 1 bis 13 zur Entfernung von Flüssigkeit aus einer Energiespeichervorrichtung zur Speicherung von elektrischer oder elektrochemischer Energie, insbesondere einer Batterie, einer Brennstoffzelle oder eines Kondensators.
